# EUROPEAN PATENT SPECIFICATION

(11) **EP 3 898 142 B1**
(45) Date of publication and mention of the grant of the patent: **12.03.2025**
(21) Application number: 19897676.3
(22) Date of filing: 17.12.2019
(51) Int. Cl.: B27B 15/04, B27D 1/04, B27M 1/02, B27M 3/00, B32B 3/14, B32B 3/30, B32B 7/12, B32B 21/02, B32B 21/13, A47B 96/20, B32B 21/14

(54) **METHOD FOR PRODUCING FURNITURE BOARD PRODUCT**
VERFAHREN ZUR HERSTELLUNG EINES MÖBELPLATTENPRODUKTS
PROCÉDÉ DE FABRICATION D'UN PRODUIT DE PANNEAU POUR MEUBLE

(30) Priority: 18.12.2018 SE 1851599
(43) Date of publication of application: 27.10.2021
(73) Proprietor: Inter IKEA Systems B.V., 2616 LN Delft (NL)
(72) Inventor: ANDERSSON, Fredrik, 291 95 FÄRLÖV (SE)
(74) Representative: Ström & Gulliksson AB
(86) International application number: PCT/SE2019/051289
(87) International publication number: WO 2020/130914

(56) References cited:
- WO-A1-2017/123143
- AU-A1- 2017 216 557
- AU-A1- 2017 216 557
- CA-A1- 2 482 070
- CN-A- 108 789 677
- CN-A- 108 789 677
- GB-A- 1 469 276
- GB-A- 1 469 276
- JP-A- 2014 104 686
- US-A1- 2005 136 276
- US-A1- 2012 282 423

## Description

### Technical field

The present disclosure relates to a method for producing a board product, the method comprising: providing a base board, producing one or more sheets of veneer, and attaching the one or more sheets of veneer to the base board.

### Background

One example of a method for producing veneer for board products is indicated in US-5979524-A. In that document there is disclosed cutting veneer from a flitch using a knife. A reciprocating movement causes the knife to peel off veneer layers. US-2005/136276-A1 describes a composite material having a wood veneer bonded to a first side of a crossband layer by a first adhesive layer. The crossband layer comprises paper impregnated with a cured phenolic resin, and the first adhesive layer comprises a melamine-formaldehyde resin, or a ureaformaldehyde resin, and the wood veneer may comprise hardwood.

US 2005/136276 A1 discloses a method for producing a furniture board product, the method comprising providing a base board; producing one or more sheets of veneer; and attaching said one or more sheets of veneer to the base board, the method further comprising producing said one or more sheets of veneer by providing a flitch; sawing the flitch into veneer sheets having a thickness in the range of 0.51- 2.5 mm; and gluing said one or more sheets of veneer to the base board.

Furthermore US-2012/282423-A1 describes a method for producing veneer strips, comprising positioning veneer sheets, scale-like and overlapped, such that the veneer sheets form a tight first joint, and, in the area underneath, a second joint that in cross-section is wedge-shaped and filled with glue. Pressure is applied to the veneer sheets and subsequently milling and/or grinding of the visible surface of the veneer sheets may take place.

A general problem in this technical field is how to provide a more efficient process with improved yield.

### Summary

One object of the present disclosure is therefore to provide a method for producing a board with improved efficiency and/or yield. This object is achieved by means of a method as defined in claim 1. More particularly, in a method of the initially mentioned kind, the sheets of veneer are produced by drying a flitch to a moisture content of 6-14 %, and sawing the flitch into veneer sheets having a thickness tᵥ in the range 0.3-1.3 mm. Subsequently, the sheets of veneer are glued to the base board.

With this method, the veneer production becomes more robust. For instance, attempting to cut a piece of flitch comprising a large knot with a knife will build excessive tensions in the flitch material, and potentially cutting errors in or close to the knot, for instance diverging thickness, or the knot simply falling out, leaving a hole in the veneer. Instead, sawing a sheet will simply cut the knot off together with the surrounding material. The thickness range indicated facilitates producing a stable veneer product. This results in a board produced efficiently with high yield, i.e. a low percentage of sheets need be discarded, and consequently, the cost may be lower.

The sawing may provide veneer sheets having a thickness in the range 0.5-1.3 mm, and more preferably in the range 0.8-1.3 mm.

Preferably, the dried flitch may have a moisture content within the range 8-12%.

The base board may be of a type selected in a group comprising: particle boards, HDF boards, MDF boards, OSB (boards), and hollow boards.

A plurality of veneer sheets may be attached side by side on the base board. If so, an interface between two adjacent veneer sheets may optionally be depressed towards the base board to form a valley extending between the two adjacent veneer sheets to provide a depth effect. The depressing may be made by a depressing rolling tool arranged to roll along the interface between the adjacent veneers and form the depression.

Such a step of depressing an interface between two adjacent veneer sheets may occur after the veneer sheets have been glued to the base board.

The plurality of veneer sheets may be attached to each other to form a compound veneer sheet prior to gluing the veneer sheets to the base board and said step of gluing said one or more sheets of veneer to the base board may involve gluing the compound veneer sheet to the base board.

The base board may have a first and a second flat surface, wherein both flat surfaces are provided with veneer sheets.

Typically, the base board has a thickness t_{b} of 5-30 mm.

### Brief description of the drawings

Figs 1-3 illustrate sawing of a flitch into veneer sheets.
Figs 4-6 illustrate preparation of veneer sheets and attaching of veneer sheets to a base board.
Fig 7 illustrates processing of interfaces between veneer sheets.
Fig 8 illustrates one example of a furniture product where a board product may be used.

### Detailed description

The present disclosure relates to furniture board products comprising veneer. Veneer has been used for centuries to produce furniture with high esthetical qualities. Further, compared to solid wood, a veneer product has potential for structural- and cost advantages, while still providing a beautiful wood patterned surface.

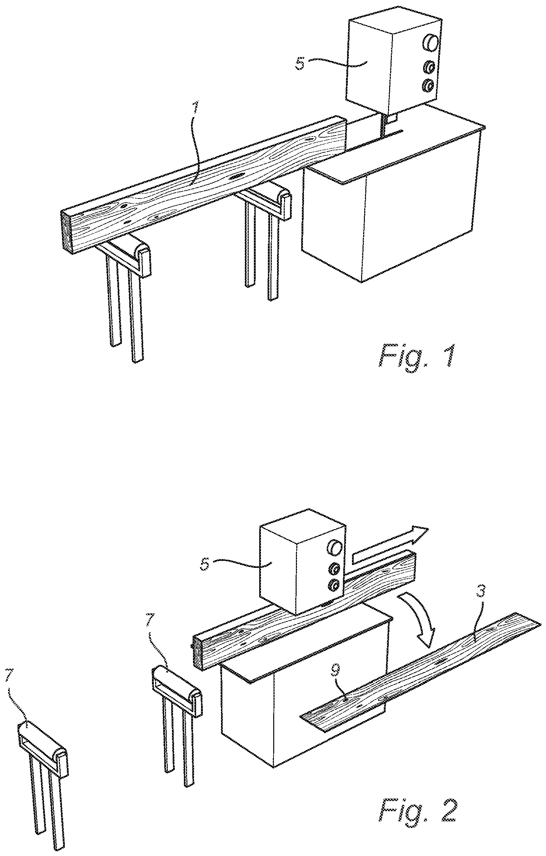

Figs 1-3 illustrate schematically the production of veneer sheets from a flitch 1 according to the present disclosure. By a flitch is here meant a longitudinal section of a log.

The flitch 1 is dried, according to the invention to a moisture content of around 6-14 % moisture content, preferably 8-12 % moisture content, measured according to EN 13183-1:2002, after being produced from a raw log (not shown). Typically, the flitch may then be stored at a relative humidity of 30-60 % in order to provide a flitch suitable for the further production steps, although a wide range of variations are possible to provide a useful result. In any case, this is in contrast to traditional production of veneer where usually the raw material is watered in order to facilitate production. The flitch may comprise of any desired wood species such as oak, maple, birch, pine, beech, walnut, spruce, eucalyptus, larch, etc.

In the present disclosure, a veneer sheet 3 is provided by sawing the flitch 1 into sheets with a thickness in the range of 0.8-1.3 mm, 0.3-1.3 mm or 0.5-1.3 mm which are considered useful veneer sawing thickness ranges. The sawing may be carried out with the cut propagating in the direction of the wood fibers, although variations are possible. In the illustrated case, a bandsaw 5 is used, although for instance a saw with a reciprocating blade may be considered as well. In any case, using sawing in this context is contrasting to conventional veneer production where typically a knife or a lathe is used to cut sheets of veneer, and this cutting takes place usually with a cut propagating in a direction perpendicular with the direction of the wood fibers.

A feeding arrangement, such as the illustrated rollers 7, may be used to feed the flitch 1 to the bandsaw 5, or the like.

Thanks to the use of sawing, even wood with relatively large knots and other irregularities can be used as a flitch. This is in contrast with traditional veneer production where usually specially selected wood with few knots and other irregularities is selected for veneer production in order to provide a useful yield. Otherwise, tensions built when attempting to cut through large knots may result in deficient veneer sheets. Such specially selected wood may be expensive. Therefore, the present disclosure allows for a relatively inexpensive production of a board product with veneer.

Additionally, this allows the production of a veneer 3 surface with much more interesting features such as knots 9, etc. which gives a vivid and appealing esthetic feature.

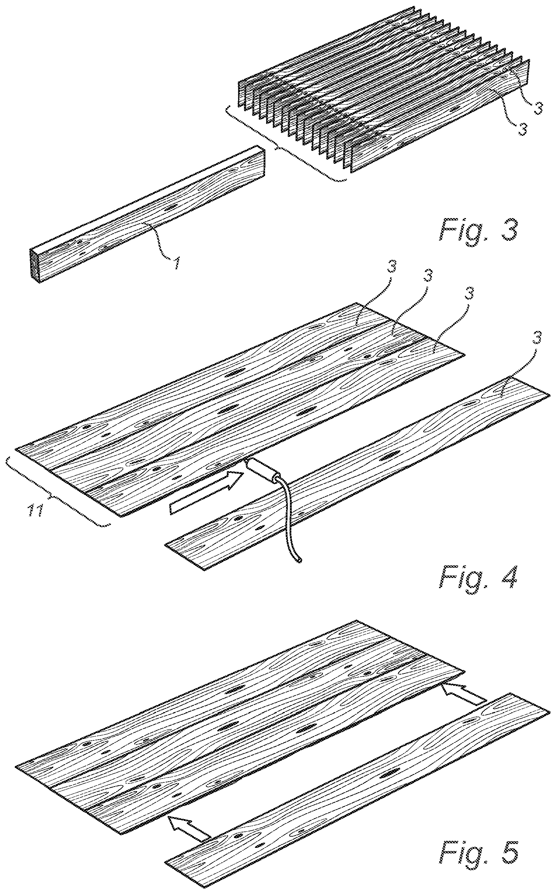

From a single flitch 1, a large number of veneer sheets 3 may be produced as shown in fig 3. Thanks to the ability of the bandsaw to cut almost any cross-section into useable veneer sheets, very little material is wasted.

Figs 4-6 illustrates further preparation of veneer sheets and attaching of veneer sheets to a base board. If desired, a number of veneer sheets 3 may be assembled into a compound veneer sheet 11 by applying glue, such as melamine urea formaldehyde (MUF), polyvinyl acetate (PVAc), ethylene-vinyl acetate (EVA), on the longitudinal side edges of the veneer. This is facilitated by the veneer being relatively thick in comparison to traditional veneer. An additional veneer sheet 3 is then applied with a side edge facing the aforementioned glued side edge, thereby increasing the compound veneer sheet 11 area, as illustrated in figs 4 and 5.

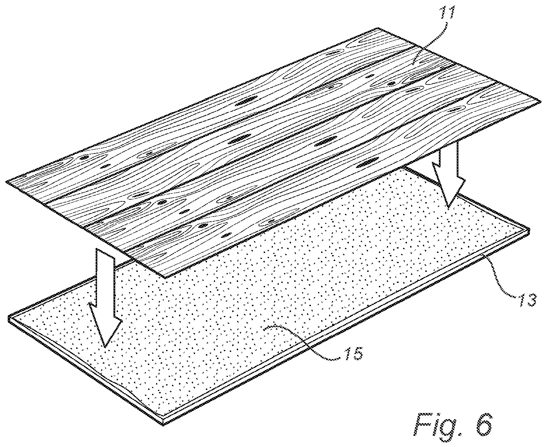

Fig 6 illustrates attaching of a compound veneer sheet 11 onto a base board 13. As mentioned, the base board may consist of different material, such as Particle boards, HDF boards, MDF boards, OSB boards, and hollow boards, depending on the intended purpose of the finished board product. A hollow board, such as the types of hollow boards described in WO 2010/069994, WO 2012/048738 and WO 2018/004430 for instance, comprising a framework and outer surfaces enclosing an air- or foam or honeycomb -filled inner space is very light, and may be used for example as a door of a cabinet or a closet. An HDF board on the other hand, is heavier but gives a more solid appearance and may be used as a shelf, for example. Generally, a base board for a veneer can be chosen that provides low cost and desired technical advantages in the intended application. For instance, MDF or HDF boards can be produced at low cost with arbitrary surface areas and may behave in a stable manner under varying temperature and humidity conditions. As a comparison, solid wood, on the other hand, may split and wrap under such conditions, and may be substantially heavier.

As shown in fig 6, a compound veneer sheet 11 may be attached to a main surface of the base board 13 by gluing, although it is also possible to attach single veneer sheets 3 (cf. fig 3) one by one. If desired, veneer may be attached to both main surfaces, and also to edge surfaces.

The glue 15 may for instance comprise melamine urea formaldehyde (MUF), polyvinyl acetate (PVAc), ethylene-vinyl acetate (EVA), and the compound veneer sheet 11 may be pressed against the main surface of the base board with a press applying, for example, a temperature of 80-120°C and a pressure of 100 to 500 kPa Veneer may be applied to one or both main surfaces of the base board 13, and also to the edge surfaces, if desired.

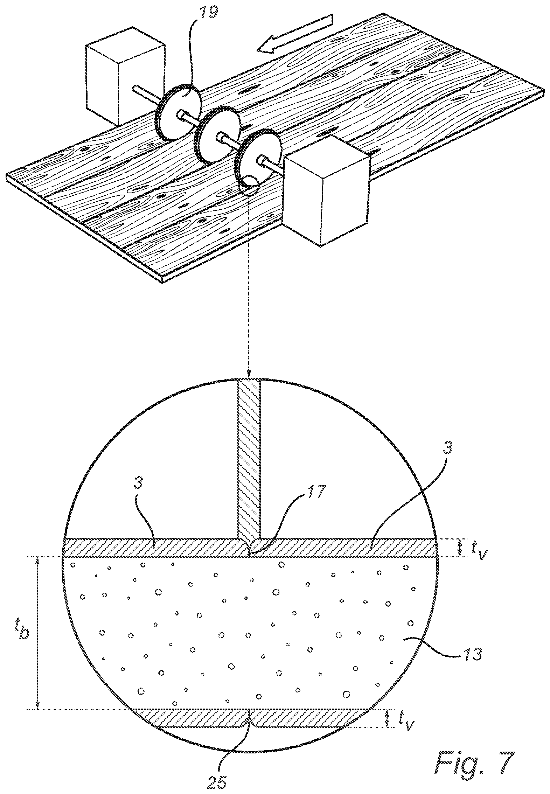

Optionally, the interface 17 at two adjacent longitudinal veneer sheet 3 edges may subsequently be depressed towards the base board 13 using rolling tools 19, such as pressing wheels, as schematically illustrated in fig 7. This provides, if desired, a valley 25 extending between the two adjacent veneer sheets to create a depth effect, making the board product resemble solid wood to a greater extent. The valley 25 is indicated on the bottom side of the board in the cross section of fig 7. The thickness t_{b} of the board 13 and the thickness tᵥ of the veneer 3 on both flat sides of the board 13 are also illustrated in fig 7.

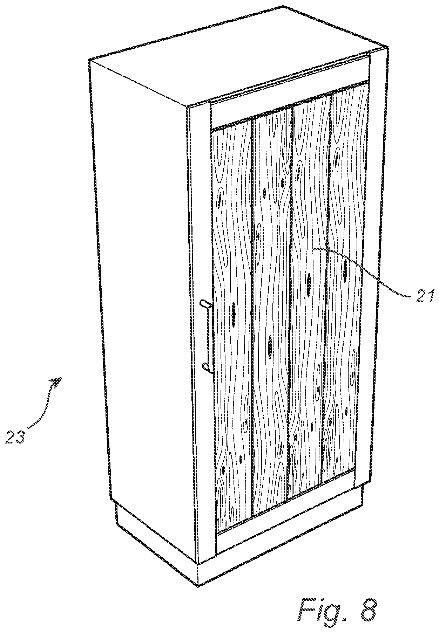

Fig 8 illustrates one possible application of a furniture board product 21 produced as described herein, where the board product 21 forms a door in a cabinet 23. Numerous possible other applications exist, including tables, chests of drawers, book shelves, drawer front pieces, kitchen work benches, etc.

The present disclosure is not limited to the above-described examples and may be varied and altered in different ways within the scope of the appended claims.

## Claims

1. A method for producing a furniture board product, the method comprising:
- providing a base board (13);
- producing one or more sheets of veneer (3); and
- attaching said one or more sheets of veneer (3) to the base board (13), the method further comprising:
- producing said one or more sheets of veneer by:
- providing a dried flitch (1), having a moisture content of 6-14 %;
- sawing the dried flitch into veneer sheets (3) having a thickness tᵥ in the range of 0.3-1.3 mm; and
- gluing said one or more sheets of veneer (3) to the base board (13).

2. Method according to claim 1, wherein the sawing provides veneer sheets (3) having a thickness in the range 0.5-1.3 mm, more preferably 0.8-1.3 mm.

3. Method according to claim 1 or 2, wherein the dried flitch (1) has a moisture content of 8-12%.

4. Method according to any of the preceding claims wherein the base board (13) is of a type selected in a group comprising: particle boards, HDF boards, MDF boards, OSB (boards), and hollow boards.

5. Method according to any of the preceding claims, further comprising attaching a plurality of veneer sheets (3) side by side on the base board (13).

6. Method according to claim 5, wherein an interface (17) between two adjacent veneer sheets (3) is depressed towards the base board (13) to form a valley (25) extending between the two adjacent veneer sheets (3) to provide a depth effect, preferably the depressing being made by a depressing rolling tool (19) arranged to roll along the interface (17) between the adjacent veneer sheets (3) and form the depression.

7. Method according to claim 6, wherein the step of depressing an interface (17) between two adjacent veneer sheets (3) occurs after the veneer sheets have been glued to the base board (13).

8. Method according to claim 5, 6 or 7, wherein the plurality of veneer sheets (3) are attached to each other to form a compound veneer sheet (11) prior to gluing the veneer sheets to the base board (13), and said step of gluing said one or more sheets of veneer to the base board involves gluing the compound veneer sheet to the base board.

9. Method according to any of the preceding claims, wherein the base board (13) has a first and a second flat surface, wherein both flat surfaces are provided with veneer sheets (3).

10. Method according to any of the preceding claims, wherein the base board (13) has a thickness t_{b} of 5-30 mm.

## Patentansprüche

1. Verfahren zum Herstellen eines Möbelplattenprodukts, das Verfahren umfassend:
- Bereitstellen einer Grundplatte (13);
- Herstellen von einem oder mehreren Furnierblättern (3); und
- Befestigen des einen oder der mehreren Furnierblätter (3) an der Grundplatte (13), das Verfahren ferner umfassend:
- Herstellen des einen oder der mehreren Furnierblätter durch:
- Bereitstellen eines getrockneten Holzstücks (1), das einen Feuchtigkeitsgehalt von 6 - 14 % hat;
- Sägen des getrockneten Holzstücks in Furnierblätter (3), die eine Dicke tᵥ im Bereich von 0,3-1,3 mm haben; und
- Verleimen des einen oder der mehreren Furnierblätter (3) mit der Grundplatte (13).

2. Verfahren nach Anspruch 1, wobei das Sägen Furnierblätter (3) mit einer Dicke im Bereich von 0,5-1,3 mm, vorzugsweise 0,8-1,3 mm, bereitstellt.

3. Verfahren nach Anspruch 1 oder 2, wobei das getrocknete Holzstück (1) einen Feuchtigkeitsgehalt von 8-12% hat.

4. Verfahren nach einem der vorhergehenden Ansprüche, wobei die Grundplatte (13) von einem Typ ist, der aus einer Gruppe ausgewählt wird, umfassend: die Spanplatten, HDF-Platten, MDF-Platten, OSB-Platten und Hohlplatten.

5. Verfahren nach einem der vorhergehenden Ansprüche, ferner umfassend das Anbringen einer Vielzahl von Furnierblättern (3) nebeneinander auf der Grundplatte (13).

6. Verfahren nach Anspruch 5, wobei eine Grenzfläche (17) zwischen zwei benachbarten Furnierblättern (3) in Richtung der Grundplatte (13) eingedrückt wird, um ein Tal (25) zu bilden, das sich zwischen den beiden benachbarten Furnierblättern (3) erstreckt, um eine Tiefenwirkung hervorzubringen, wobei das Eindrücken vorzugsweise durch ein eindrückendes Rollwerkzeug (19) erfolgt, das so angeordnet ist, dass es entlang der Grenzfläche (17) zwischen den benachbarten Furnierblättern (3) rollt und die Eindrückung bildet.

7. Verfahren nach Anspruch 6, wobei der Schritt des Eindrückens einer Grenzfläche (17) zwischen zwei benachbarten Furnierblättern (3) erfolgt, nachdem die Furnierblätter mit der Grundplatte (13) verleimt worden sind.

8. Verfahren nach Anspruch 5, 6 oder 7, wobei die mehreren Furnierblätter (3) miteinander verbunden werden, um ein zusammengesetztes Furnierblatt (11) zu bilden, bevor die Furnierblätter mit der Grundplatte (13) verleimt werden, und der Schritt des Verleimens des einen oder der mehreren Furnierblätter mit der Grundplatte das Verleimen des zusammengesetzten Furnierblatts (5) mit der Grundplatte beinhaltet.

9. Verfahren nach einem der vorhergehenden Ansprüche, wobei die Grundplatte (13) eine erste und eine zweite ebene Fläche hat, wobei beide ebenen Flächen mit Furnierblättern (3) bereitgestellt sind.

10. Verfahren nach einem der vorangehenden Ansprüche, wobei die Grundplatte (13) eine Dicke t_{b} von 5-30 mm hat.

## Revendications

1. Procédé pour fabriquer un produit de panneau pour meuble, le procédé comprenant :
- la fourniture d'un panneau de base (13) ;
- la fabrication d'une ou plusieurs feuilles de placage (3) ; et
- la fixation desdites une ou plusieurs feuilles de placage (3) au panneau de base (13), le procédé comprenant en outre :
- la fabrication desdites une ou plusieurs feuilles de placage en :
- fournissant un quartelot séché (1), ayant une teneur en humidité de 6 à 14 % ;
- sciant le quartelot séché en feuilles de placage (3) ayant une épaisseur tᵥ dans la plage de 0,3 à 1,3 mm ; et
- le collage desdites une ou plusieurs feuilles de placage (3) au panneau de base (13).

2. Procédé selon la revendication 1, dans lequel le sciage fournit des feuilles de placage (3) ayant une épaisseur dans la plage de 0,5 à 1,3 mm, de manière davantage préférée de 0,8 à 1,3 mm.

3. Procédé selon la revendication 1 ou 2, dans lequel le quartelot séché (1) a une teneur en humidité de 8 à 12 %.

4. Procédé selon l'une quelconque des revendications précédentes dans lequel le panneau de base (13) est d'un type sélectionné dans un groupe comprenant : des panneaux de particules, des panneaux HDF, des panneaux MDF, des (panneaux) OSB, et des panneaux à âme creuse.

5. Procédé selon l'une quelconque des revendications précédentes, comprenant en outre la fixation d'une pluralité de feuilles de placage (3) côte à côte sur le panneau de base (13).

6. Procédé selon la revendication 5, dans lequel une interface (17) entre deux feuilles de placage (3) adjacentes est enfoncée vers le panneau de base (13) pour former une vallée (25) s'étendant entre les deux feuilles de placage (3) adjacentes pour fournir un effet de profondeur, de préférence l'enfoncement étant réalisé par un outil roulant pour enfoncement (19) agencé pour rouler le long de l'interface (17) entre les feuilles de placage (3) adjacentes et former l'enfoncement.

7. Procédé selon la revendication 6, dans lequel l'étape consistant à enfoncer une interface (17) entre deux feuilles de placage (3) adjacentes a lieu après que les feuilles de placage ont été collées au panneau de base (13).

8. Procédé selon la revendication 5, 6 ou 7, dans lequel la pluralité de feuilles de placage (3) sont fixées les unes aux autres pour former une feuille de placage composite (11) avant le collage des feuilles de placage au panneau de base (13), et ladite étape consistant à coller lesdites une ou plusieurs feuilles de placage au panneau de base implique de coller la feuille de placage composite au panneau de base.

9. Procédé selon l'une quelconque des revendications précédentes, dans lequel le panneau de base (13) a une première et une seconde surface plate, dans lequel les deux surfaces plates sont pourvues de feuilles de placage (3).

10. Procédé selon l'une quelconque des revendications précédentes, dans lequel le panneau de base (13) a une épaisseur t_{b} de 5 à 30 mm.
